# EUROPEAN PATENT SPECIFICATION

(11) **EP 3 901 503 B1**
(45) Date of publication and mention of the grant of the patent: **13.03.2024**
(21) Application number: 19897730.8
(22) Date of filing: 08.11.2019
(51) Int. Cl.: F16L 11/12, F16L 55/00, F17D 5/06, F16L 11/08, G01M 3/18

(54) **FLUID LEAKAGE DETECTION SYSTEM AND METHOD FOR MARINE HOSE AND METHOD THEREOF**
FUIDLECKDETEKTIONSSYSTEM FÜR MEERESSCHLAUCH UND VERFAHREN DAZU
SYSTÈME DE DÉTECTION DE FUITE DE FLUIDE POUR TUYAU MARIN ET METHODE ASSOCIEE

(30) Priority: 18.12.2018 JP 2018236522
(43) Date of publication of application: 27.10.2021
(73) Proprietor: The Yokohama Rubber Co., Ltd., Kanagawa Prefecture, 254-8601 (JP)
(72) Inventor: YAMADA, Shu, Hiratsuka-shi, Kanagawa 254-8601 (JP); ISHIBASHI, Yusuke, Hiratsuka-shi, Kanagawa 254-8601 (JP); ONO, Shunichi, Hiratsuka-shi, Kanagawa 254-8601 (JP)
(74) Representative: Grünecker Patent- und Rechtsanwälte PartG mbB
(86) International application number: PCT/JP2019/043907
(87) International publication number: WO 2020/129457

(56) References cited:
- WO-A1-2016/128250
- JP-A- H11 325 378
- JP-A- 2006 200 919
- JP-A- 2006 200 919
- JP-A- 2007 177 847
- JP-A- 2007 177 847
- JP-A- 2007 218 839
- JP-A- 2007 218 839

## Description

### Technical Field

The present invention relates to a marine hose fluid leakage detection system, and particularly relates to a marine hose fluid leakage detection system that can more reliably detect fluid leakage of a marine hose without substantially changing the structure of the marine hose.

### Background Art

EP 3 256 769 A1 discloses a slurry operation device with a monitoring system for detecting interior wear is disclosed. The slurry operation device is used to transfer or process solid material in a fluid, and has an enclosing crosssection. The slurry operation device includes an interior wear layer having an inner surface, adapted for contact with solid material in a fluid, and an outer surface; a support structure wound, woven or braided about the outer surface; and an exterior cover layer being disposed over the support structure. The monitoring system includes at least one moisture sensor arranged to detect moisture in or at the support structure; and communication means coupled to the moisture sensor for providing a signal representative of moisture detection in or at the support structure. A slurry operation plant including at least one slurry operation device according to above is also disclosed, as well as a method for installing the monitoring system for detecting interior wear of a slurry operation device.

JP 2007 218839 A discloses a water leakage detection type pipe joint which comprises layers. Moreover, an annular sealing portion at both ends of the pipe peripheral wall portion is fixed by flange portions. In this way, a plurality of pipes can be connected to each other. It is also disclosed that a plurality of non-contact type wireless IC sensors are provided in the circumferential direction of the pipe peripheral wall portion. These sensors output data by a radio wave and are in contact with a writer provided separately from the sensor. It is configured to be input to a computer via a controller.

In marine hoses that connect a tanker on the sea with a land facility or the like to transport a fluid such as a crude oil over the sea, a structure that includes a fluid retention layer between the reinforcing layers laminated on the outer peripheral side of a flow path is known. Fluid leaking from the flow path is temporarily stored in the fluid retention layer to prevent leakage to the outside. In order to detect abnormalities in such fluid leakage, various leakage detection means that are activated by the fluid flowing into a fluid retention layer have been proposed (for example, see Patent Document 1).

In the detection means proposed in Patent Document 1, when the fluid flows into the fluid retention layer, the air pressure of the fluid retention layer increases. As a result, a spiral flexible tube disposed in the fluid retention layer contracts and deforms. This contraction deformation is detected by a pneumatic sensor connected to the flexible tube via a communication tube. However, in structures that utilize such changes in the air pressure of the fluid retention layer, it is difficult to detect fluid leakage when the change in air pressure is small even when the fluid flows into the fluid retention layer. In addition, there is also a problem that the structure of the marine hose is changed in order to provide the spiral flexible tube, the communication tube, and the like in the fluid retention layer.

### Citation List

### Patent Literature

Patent Document 1: JP 2007-177847 A

### Summary of Invention

### Technical Problem

It is an object of the present invention is to provide a marine hose fluid leakage detection system that can more reliably detect fluid leakage of a marine hose without substantially changing the structure of the marine hose. According to the present invention said object is solved by a marine hose fluid leakage detection system having the features of independent claim 1 and a method for detecting leakage of fluid flowing through a flow path of a marine hose by using the marine hose fluid leakage detection system according to the method steps of independent claim 6. Preferred embodiments are laid down in the dependent claims.

### Advantageous Effects of Invention

According to the invention, when the fluid flowing through the flow path flows into the fluid retention layer, the passive IC tag installed in the fluid retention layer is surrounded by or soaked in the fluid. Therefore, the radio wave receiving function or the radio wave transmitting mechanism of the IC tag is damaged. As a result, the radio waves are not transmitted from the IC tag in response to the radio waves transmitted from the radio wave transmitter disposed outside the marine hose, or the transmitted radio waves are weakened. Thus, when the strength of the radio waves transmitted from the IC tag received by the radio wave receiver is used as an indicator, it is possible to more reliably determine the presence of fluid leakage from the flow path. Since the marine hose may only have the passive IC tag installed in the fluid retention layer, and the passive IC tag is very small, the structure of the marine hose is not substantially changed.

### Brief Description of Drawings

FIG. 1 is an explanatory diagram illustrating a marine hose in which a marine hose fluid leakage detection system of the present invention is installed.
FIG. 2 is an explanatory diagram illustrating the fluid leakage detection system in a longitudinal cross-sectional view in which a portion of the marine hose is enlarged.
FIG. 3 is an explanatory diagram illustrating the periphery of an IC tag of FIG. 2 being enlarged, in which FIG. 3A is a plan view, and FIG. 3B is a cross-sectional view.
FIG. 4 is a cross-sectional view taken along A-A of FIG. 2.

### Description of Embodiments

Hereinafter, a marine hose fluid leakage detection system of the present invention (hereinafter referred to as a detection system) will be described based on the embodiments illustrated in the drawings.

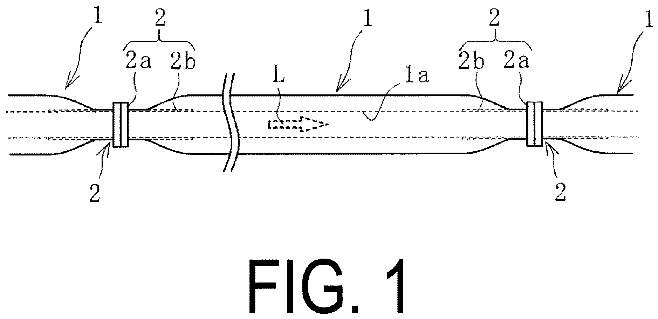

As illustrated in FIG. 1, a marine hose 1 includes connecting end portions 2 for connection to another marine hose 1 at both ends in the longitudinal direction thereof. Each connecting end portion 2 includes a nipple 2b extending in the longitudinal direction of the marine hose 1 and a flange 2a joined to one end of the nipple 2b in the longitudinal direction. Generally, eight or more and ten or less marine hoses 1 are connected and used.

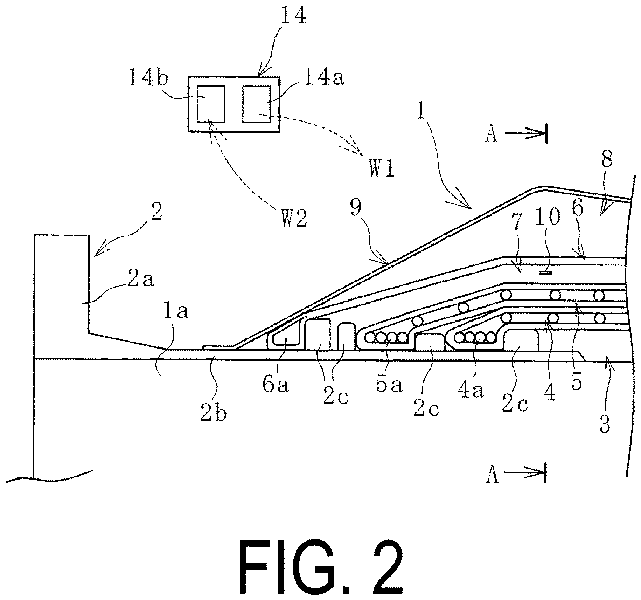

As illustrated in FIG. 2, between the nipples 2b at both ends of the marine hose 1, an inner rubber layer 3, an inner reinforcing layer 4, a body wire layer 5, a fluid retention layer 7, an outer reinforcing layer 6, a buoyant layer 8 and an outer covering layer 9 are laminated in this order on the outer peripheral side of a flow path 1a starting from the inner peripheral side toward the outer peripheral side of the marine hose 1. The inner peripheral side of the inner rubber layer 3 serves as the flow path 1a for fluid L. Examples of the fluid L include crude oil, gasoline, LPG, and the like.

The buoyant layer 8 is made of a material such as sponge rubber, polyurethane foam or the like that exhibits buoyancy to float the marine hose 1 above the sea. Thus, the marine hose 1 is a so-called floating-type marine hose. The outer covering layer 9 is made of a non-water-permeable material such as rubber, and has a line pattern or the like having excellent visibility on the surface thereof.

An appropriate material is selected for the inner rubber layer 3 depending on the type of the fluid L; and in a case where the fluid L is crude oil or the like, the inner rubber layer 3 is made of nitrile rubber or the like having excellent oil resistance. The inner reinforcing layer 4 and the outer reinforcing layer 6 are each formed by laminating a plurality of reinforcing cord layers in which the reinforcing cords are covered with rubber. The body wire layer 5 is configured by spirally winding metal wires around the outer peripheral rubber of the inner reinforcing layer 4 at predetermined intervals. The inner reinforcing layer 4, the body wire layer 5, and the outer reinforcing layer 6 are fixed to the nipple 2b by respective nipple wires 4a, 5a, 6a at one end of each and a fixing ring 2c protruding from the outer peripheral surface of the nipple 2b. The fluid retention layer 7 interposed between the inner reinforcing layer 4 and the outer reinforcing layer 6 is a space for storing the fluid L that has leaked from the flow path 1a.

The detection system includes a passive IC tag 10, radio wave transmitter 14a, and radio wave receiver 14b. The IC tag 10 is installed in the fluid retention layer 7 at a predetermined position in the longitudinal direction of the marine hose 1. The IC tag 10 is disposed in the fluid retention layer 7 in the process (molding process) of manufacturing the marine hose 1 and is fixed in the fluid retention layer 7 by vulcanization bonding or the like. The radio wave transmitter 14a and the radio wave receiver 14b are separated from the marine hose 1 and are disposed outside the marine hose 1. In this embodiment, a detector 14 in which the radio wave transmitter 14a and the radio wave receiver 14b are integrated is used, but these components may be separate and independent. When the detector 14 is a portable type, the leakage detection operation becomes easier.

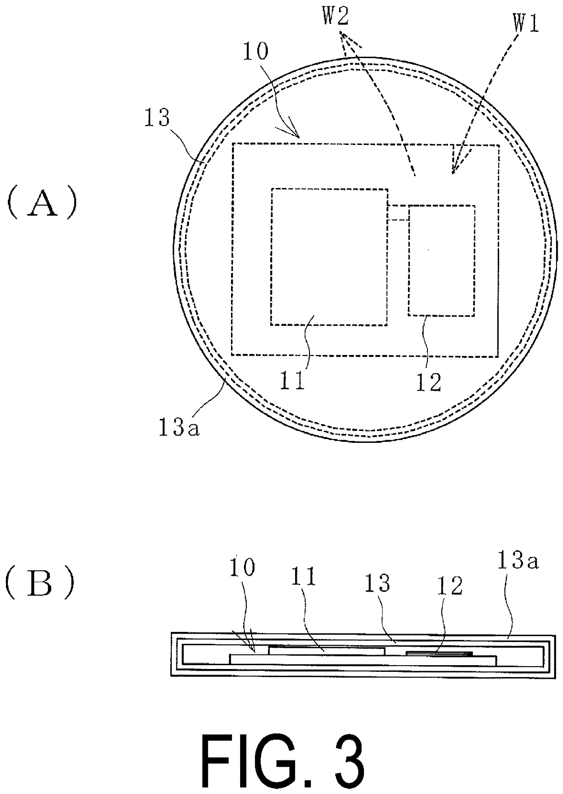

As illustrated in FIG. 3, the IC tag 10 includes an IC chip 11 and an antenna unit 12 and is housed in a case 13. The IC tag 10 (the case 13) has a very small size, for example, a vertical dimension and a horizontal dimension each are 50 mm or less (corresponding to an outer diameter of 50 mm or less) and a thickness is 10 mm or less. More preferably, the IC tag 10 (the case 13) has a vertical dimension and a horizontal dimension of 30 mm or less (corresponding to an outer diameter of 30 mm or less) and a thickness of 5 mm or less.

The case 13 has a certain degree of rigidity to protect the IC tag 10 from external forces. Furthermore, the case 13 is formed from a resin such as ABS resin, PVC resin, PP resin, or the like, so as not to block the passage of radio waves W1 and W2 described below. In this embodiment, the case 13 is covered by a permeable material 13a through which the fluid L penetrates. For example, resin fibers, natural fibers, and the like through which crude oil penetrates are used as the permeable material 13a. The case 13 may be formed of the permeable material 13a.

When the radio waves W1 are transmitted from the radio wave transmitter 14a, the radio waves W2 are transmitted from the IC tag 10 in accordance with the radio waves W1, and the radio waves W2 are received by the radio wave receiver 14b. In other words, the IC tag 10 and the detector 14 form a RFID (Radio Frequency Identification) system. The frequencies and output powers of the radio waves W1 and W2 to be communicated are appropriately set. However, when the passive IC tag 10 is used, since it is difficult to set high output power, the communication distance of the radio waves W1 and W2 between the IC tag 10 and the detector 14 is, for example, in the range of several tens of cm or more and several meters or less.

In this embodiment, the IC chip 11 stores position identification information for identifying the installation position (the position in the longitudinal direction or the positions in the longitudinal direction and the circumferential direction) of the IC tag 10 on the marine hose 1. Then, the position identification information is transmitted to the radio wave receiver 14b via the radio waves W2. Other information may be stored in the 1C chip 11 and transmitted via the radio waves W2. For example, information such as the specification information and the manufacturing information of the marine hose 1, the installation time of the IC tag 10 on the marine hose 1, or the like may be stored in the IC chip 11, and the information may be transmitted.

The predetermined position in the longitudinal direction of the marine hose 1 in which the IC tag 10 is installed is preferably within a range in which the nipple 2b extends. Since the nipple 2b is present in this range, the IC tag 10 is not substantially affected by bending deformation and twisting deformation of the marine hose 1, and it is advantageous for protecting the IC tag 10 from external forces over a long period of time.

The IC tag 10 is installed only within a range to which the nipple 2b at the end portion in the longitudinal direction of the marine hose 1 extends, and in addition to this range, the IC tag 10 may be installed in a central portion in the longitudinal direction of the marine hose 1. In other words, the IC tag 10 is installed at least in a range to which the nipple 2b at the end portion in the longitudinal direction of the marine hose 1 extends.

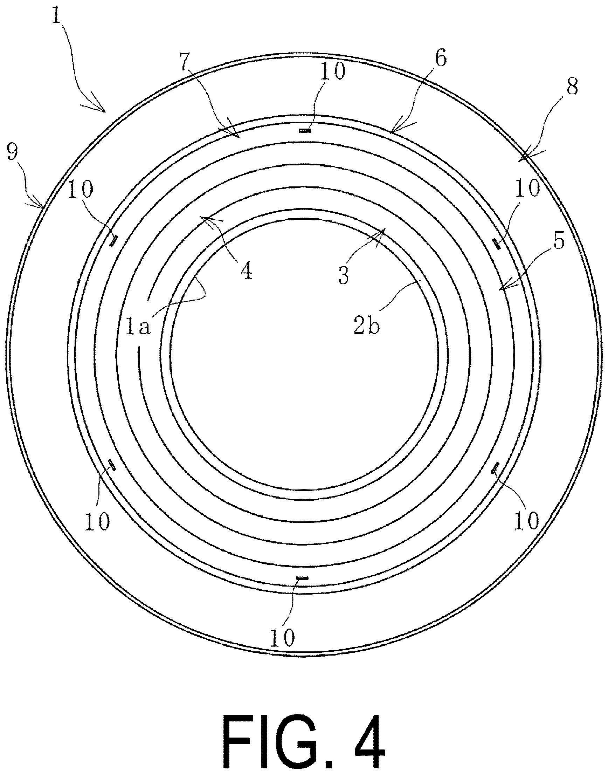

Since the radio waves W1 and W2 are substantially attenuated in water, when IC tag 10 is present in water, it is difficult to communicate the radio waves W1, W2 between the IC tag 10 and the detector 14 in the air. The IC tag 10 may be installed in the fluid retention layer 7 such that it is located above water when the marine hose 1 is in use, but the IC tag 10 may be positioned under water due to twisting of the marine hose 1. Therefore, as illustrated in FIG. 4, a plurality of the IC tags 10 are preferably installed at predetermined positions in the longitudinal direction of the marine hose 1 at intervals in the circumferential direction of the marine hose 1 so that there is always the IC tag 10 located above water when the marine hose 1 is in use. For example, three or more and six or less IC tags 10 are installed at one predetermined position in the longitudinal direction of the marine hose 1 at equal intervals in the circumferential direction.

Hereinafter, an example of a procedure for determining whether or not the fluid L is leaking from the flow path 1a using this detection system will be described.

A worker approaches the marine hose 1 using a work boat or the like where the detector 14 is installed periodically or as necessary in order to detect leakage of the fluid L. Then, the detector 14 is activated to emit the radio waves W1 from the radio wave transmitter 14a toward an appropriate range of the marine hose 1 located above water (the range where the IC tag 10 is embedded). If the fluid L has not flowed into the fluid retention layer 7, the IC tag 10 works normally to cause the IC tag 10 to produce electric power utilizing the transmitted radio waves W1. The IC tag 10 transmits the radio waves W2 using the electric power, and the radio wave receiver 14b receives the radio waves W2. In the radio wave receiver 14b, the strength of the received radio waves W2 is displayed as a numerical value, for example.

On the other hand, when the inner rubber layer 3, the inner reinforcing layer 4, and the like are damaged, and the fluid L flows from the flow path 1a into the fluid retention layer 7, and the IC tag 10 (the case 13) is surrounded by or soaked in the fluid L, the IC tag 10 itself is broken by the fluid L, or the fluid L blocks the radio waves W1 and W2. Therefore, the radio wave receiving function or the radio wave transmitting function of the IC tag 10 is damaged. As a result, the radio waves W2 are not transmitted from the IC tag 10 in response to the radio waves W1 transmitted from the radio wave transmitter 14a, or the transmitted radio waves W2 are weakened (the output power is small). As a result, the radio waves W2 received by the radio wave receiver 14b disappear (the radio waves W2 cannot be received), or the received radio waves W2 are weakened.

Thus, when the strength of the output value of the radio waves W2 received by the radio wave receiver 14b from the IC tag 10 is determined in advance in a normal state in which the fluid L does not leak from the flow path 1a, it is possible to determine the strength (magnitude of the output) of the radio waves W2 transmitted by the IC tag 10 with respect to that of the normal state. Then, a reference value C at which the strength of the radio waves W2 received by the radio wave receiver 14b is regarded as a normal state is set. If the strength of the radio waves W2 received by the radio wave receiver 14b is less than the reference value C, it is determined that the fluid L has flowed into the fluid retention layer 7. If the strength is greater than or equal to the reference value C, it is determined that the fluid L has not flowed into the fluid retention layer 7. In other words, if the strength of the radio waves W2 received by the radio wave receiver 14b is less than the reference value C, it can be determined that the fluid L has leaked from flow path 1a. If the strength is greater than or equal to the reference value C, it can be determined that the fluid L has not leaked from the flow path 1a. The reference value C is set to an appropriate value on the basis of the results of the pre-test, and the like.

The worker can immediately determine whether the fluid L has leaked from the flow path 1a by comparing the numerical value and the like of the strength of the radio waves W2 displayed on the radio wave receiver 14b with the reference value C. An arithmetic logical unit that compares the strength of the radio waves W2 received by the radio wave receiver 14b with the reference value C may also be provided in the detector 14. When the detection system has such an arithmetic logical unit, it is possible to automatically determine whether the fluid L has leaked from the flow path 1a.

As described above, in the detection system according to the present invention, it is possible to more reliably determine whether the fluid L has leaked from the flow path 1a on the basis of the strength of the radio waves W2 transmitted from the IC tag 10 received by the radio wave receiver 14b. Since the marine hose 1 may only have the IC tag 10 installed in the fluid retention layer 7, and the passive IC tag 10 is very small, the structure of the marine hose 1 is not substantially changed. Therefore, the performance of the marine hose 1 is not affected, and the various quality certification items of the marine hose 1 are not affected.

Even when the fluid L does not leak from the flow path 1a, due to reasons such as damage of each IC tag 10 by external forces, normal communication of the radio waves W1 and W2 between the detector 14 and the respective IC tag 10 may be disabled. Therefore, when the plurality of IC tags 10 are installed and when the proportion of the number of IC tags 10, where the strength of the radio waves W2 received by the radio wave receiver 14b is greater than or equal to the reference value C, is greater than or equal to a reference proportion R, it is determined that the fluid L has not flowed into the fluid retention layer 7. When the proportion is less than the reference proportion R. it may be determined that the fluid L has flowed into the fluid retention layer 7. This determination is advantageous in preventing errors in the determination of the presence of leakage of the fluid L from the flow path 1a. The reference proportion R is set to an appropriate proportion on the basis of the results of the pre-test, and the like.

In this embodiment, since the fluid L that has flowed into the fluid retention layer 7 penetrates the permeable material 13a covering the IC tag 10, the IC tag 10 is more reliably surrounded by the fluid L. Therefore, even if the amount of leakage of the fluid L is small, since communication of the radio waves W1 and W2 is disabled, it is advantageous in more reliably determining that leakage of the fluid L from the flow path 1a has occurred.

In this embodiment, the position identification information for identifying the installation position of the IC tag on the marine hose 1 is transmitted via the radio waves W2 transmitted from the IC tag 10. Therefore, by analyzing the radio waves W2 (the position identification information) received by the radio wave receiver 14b, it becomes easier to more reliably identify the position where the fluid L is leaking.

When the IC tags 10 having identical specifications and the IC tags 10 of identical manufacturing lots are used, there is a risk that all the IC tags 10 do not function properly due to some reason, and due to this, errors occur in the determination of the presence of leakage of the fluid L. Therefore, to avoid this risk, the IC tags 10 having different specifications or the IC tags 10 of different manufacturing lots may be mixed and installed in the fluid retention layer 7.

Note that a known oil pod installed on the outer peripheral surface of the nipple 2b for detecting the fluid L flowing into the fluid retention layer 7 may be used in combination with the above-described detection system.

### Reference Signs List

1 Marine hose
1a Flow path
2 Connecting end portion
2a Flange
2b Nipple
2c Fixing ring
3 Inner rubber layer
4 Inner reinforcing layer
4a Nipple wire
5 Body wire layer
5a Nipple wire
6 Outer reinforcing layer
6a Nipple wire
7 Fluid retention layer
8 Buoyant layer
9 Outer covering layer
10 IC tag
11 IC chip
12 Antenna unit
13 Case
13a Permeable material
14 Detector
14a Radio wave transmitter
14b Radio wave receiver

## Claims

1. A marine hose fluid leakage detection system for detecting leakage of fluid (L) flowing through a flow path (1a) of a marine hose (1), comprising
the marine hose (1), wherein the marine hose (1) comprises
an inner reinforcing layer (4) and an outer reinforcing layer (6) laminated on an outer peripheral side of the flow path (1a), a fluid retention layer (7) interposed between the inner reinforcing layer (4) and the outer reinforcing layer (6), a buoyant layer (8) laminated on an outer peripheral side of the fluid retention layer (7) and at least one connecting end portion (2) comprising a nipple (2b) extending in the longitudinal direction of the marine hose (1), the marine hose fluid leakage detection system further comprising:
a passive IC tag (10) provided in the fluid retention layer (7) at a predetermined position in a longitudinal direction of the marine hose (1); and
a radio wave transmitter (14a) and a radio wave receiver (14b) disposed outside the marine hose (1), wherein
the radio wave receiver (14b) is configured to receive radio waves (W2) transmitted from the IC tag (10) in response to radio waves (W1) transmitted from the radio wave transmitter (14a), and
presence of leakage of the fluid (L) is configured to be detected when a strength of the radio waves (W2) transmitted from the IC tag (10) is less than a reference value (C), the reference value (C) being the strength of the radio waves (W2) transmitted by the IC tag (10) and received by the radio wave receiver (14b) in a normal state in which the fluid (L) does not leak from the flow path (1a),
wherein the IC tag (10) is provided at least within a range to which the nipple (2b) extends, at an end portion in the longitudinal direction of the marine hose (1).

2. A marine hose fluid leakage detection system according to claim 1, wherein the IC tag (10) is covered by a permeable material through which the fluid penetrates.

3. The marine hose fluid leakage detection system according to any one of claims 1 to 2, wherein a plurality of the IC tags (10) are provided at intervals in a circumferential direction of the marine hose (1) at a predetermined position in the longitudinal direction of the marine hose (1).

4. A marine hose fluid leakage detection system according to any one of claims 1 to 3, wherein position identification information identifying an installation position of the IC tag (10) on the marine hose is stored in the IC tag (10), and
the position identification information is transmitted to the radio wave receiver (14b) via the radio waves (W2) transmitted from the IC tag (10).

5. A marine hose fluid leakage detection system according to any one of claims 1 to 4, wherein IC tags (10) having different specifications or IC tags (10) of different manufacturing lots are installed in a mixed manner as the IC tag (10).

6. A method for detecting leakage of fluid (L) flowing through a flow path (1a) of a marine hose (1) by using the marine hose fluid leakage detection system according to claim 1, the method comprising:
receiving radio waves (W2) transmitted from the IC tag (10) in response to radio waves (W1) transmitted from the radio wave transmitter (14a) by the radio wave receiver (14b), and
detecting presence of leakage of the fluid (L) when a strength of the radio waves (W2) transmitted from the IC tag (10) is less than the reference value (C).

## Patentansprüche

1. Meeresschlauch-Fluidleckerfassungssystem zum Erfassen des Leckens eines durch einen Flusspfad (1a) eines Meeresschlauchs (1) fließenden Fluids (L), umfassend:
den Meeresschlauch (1), wobei der Meeresschlauch (1) umfasst:
eine innere Verstärkungsschicht (4) und eine äußere Verstärkungsschicht (6), die auf eine Außenumfangsseite des Flusspfads (1a) laminiert sind, eine Fluidhalteschicht (7), die zwischen der inneren Verstärkungsschicht (4) und der äußeren Verstärkungsschicht (6) angeordnet ist, eine Schwimmschicht (8), die auf eine Außenumfangsseite der Fluidhalteschicht (7) laminiert ist, und wenigstens einen Verbindungsendteil (2), der einen Nippel (2b) umfasst, der sich in der Längsrichtung des Meeresschlauchs (1) erstreckt, wobei das Meeresschlauch-Fluidleckerfassungssystem weiterhin umfasst:
ein passives IC-Tag (10), das in der Fluidhalteschicht (7) an einer vorbestimmten Position in einer Längsrichtung des Meeresschlauchs (1) vorgesehen ist,
einen Funkwellensender (14a) und einen Funkwellenempfänger (14b), die außerhalb des Meeresschlauchs (1) angeordnet sind,
wobei der Funkwellenempfänger (14b) konfiguriert ist zum Empfangen von Funkwellen (W2), die von dem IC-Tag (10) in Antwort auf von dem Funkwellensender (14a) gesendete Funkwellen (W1) gesendet werden,
wobei das Vorhandensein eines Leckens des Fluids (L) erfasst wird, wenn die Stärke der von dem IC-Tag (10) gesendeten Funkwellen (W2) kleiner als ein Referenzwert (C) ist, wobei der Referenzwert (C) gleich der Stärke der Funkwellen (W2), die in einem normalen Zustand, in dem das Fluid (L) nicht von dem Flusspfad (1a) leckt, durch das IC-Tag (10) gesendet und durch den Funkwellenempfänger (14b) empfangen werden, ist, und
wobei das IC-Tag (10) wenigstens innerhalb eines Bereichs, zu dem sich der Nippel (2b) erstreckt, an einem Endteil in der Längsrichtung des Meeresschlauchs (1) vorgesehen ist.

2. Meeresschlauch-Fluidleckerfassungssystem nach Anspruch 1, wobei das IC-Tag (10) durch ein durchlässiges Material, durch welches das Fluid hindurchgeht, bedeckt ist.

3. Meeresschlauch-Fluidleckerfassungssystem nach Anspruch 1 oder 2, wobei eine Vielzahl von IC-Tags (10) mit Intervallen in einer Umfangsrichtung des Meeresschlauchs (1) an einer vorbestimmten Position in der Längsrichtung des Meeresschlauchs (1) vorgesehen sind.

4. Meeresschlauch-Fluidleckerfassungssystem nach einem der Ansprüche 1 bis 3, wobei Positionsidentifikationsinformationen, die die Installationsposition des IC-Tags (10) an dem Meeresschlauch identifizieren, in dem IC-Tag (10) gespeichert sind, und
die Positionsidentifikationsinformationen mittels der von dem IC-Tag (10) gesendeten Funkwellen (W2) an den Funkwellenempfänger (14b) gesendet werden.

5. Meeresschlauch-Fluidleckerfassungssystem nach einem der Ansprüche 1 bis 4, wobei IC-Tags (10) mit verschiedenen Spezifikationen oder IC-Tags (10) aus verschiedenen Produktionschargen gemischt als das IC-Tag (10) installiert sind.

6. Verfahren zum Erfassen eines Leckens eines durch einen Fluidpfad (1a) eines Meeresschlauchs (1) fließenden Fluids (L) unter Verwendung des Meeresschlauch-Fluidleckerfassungssystems gemäß Anspruch 1, wobei das Verfahren umfasst:
Empfangen, durch den Funkwellenempfänger (14b), von Funkwellen (W2), die von dem IC-Tag (10) in Antwort auf von dem Funkwellensender (14a) gesendete Funkwellen (W1) gesendet werden, und
Erfassen des Vorhandenseins eines Leckens des Fluids (L), wenn die Stärke der von dem IC-Tag (10) gesendeten Funkwellen (W2) kleiner als der Referenzwert (C) ist.

## Revendications

1. Système de détection de fuite de fluide pour tuyau marin destiné à détecter une fuite de fluide (L) circulant au travers d'un canal d'écoulement (1a) d'un tuyau marin (1), comprenant :
le tuyau marin (1), le tuyau marin (1) comprenant :
une couche de renforcement interne (4) et une couche de renforcement externe (6) stratifiées sur le côté périphérique externe du canal d'écoulement (1a), une couche de rétention de fluide (7) intercalée entre la couche de renforcement interne (4) et la couche de renforcement externe (6), une couche flottante (8) stratifiée sur le côté périphérique externe de la couche de rétention de fluide (7) et au moins un organe terminal de raccordement (2) comprenant un manchon (2b) se déployant dans la direction longitudinale du tuyau marin (1), le système de détection de fuite de fluide pour tuyau marin comprenant en outre :
une étiquette à circuit intégré passif (10) disposée dans la couche de rétention de fluide (7) à une position prédéterminée dans la direction longitudinale du tuyau marin (1), et
un émetteur d'ondes radio (14a) et un récepteur d'ondes radio (14b) disposés à l'extérieur du tuyau marin (1), où
le récepteur d'ondes radio (14b) est configuré pour recevoir des ondes radio (W2) transmises depuis l'étiquette à circuit intégré (10) en réponse à des ondes radio (W1) transmises depuis l'émetteur d'ondes radio (14a), et
la présence d'une fuite du fluide (L) est configurée pour être détectée lorsque l'intensité des ondes radio (W2) transmises depuis l'étiquette à circuit intégré (10) est inférieure à une valeur de référence (C), la valeur de référence (C) étant l'intensité des ondes radio (W2) transmises par l'étiquette à circuit intégrée (10) et reçues par le récepteur d'ondes radio (14b) à l'état normal dans lequel le fluide (L) ne fuit pas du canal d'écoulement (1a),
dans lequel l'étiquette à circuit intégrée (10) est disposée au moins à l'intérieur d'une plage dans laquelle s'étend le manchon (2b) au niveau d'une extrémité dans la direction longitudinale du tuyau marin (1).

2. Système de détection de fuite de fluide pour tuyau marin selon la revendication 1, dans lequel l'étiquette à circuit intégrée (10) est recouverte d'un matériau perméable au travers duquel pénètre le fluide.

3. Système de détection de fuite de fluide pour tuyau marin selon l'une quelconque des revendications 1 et 2, dans lequel une pluralité d'étiquettes à circuit intégré (10) sont disposées à des intervalles dans la direction circonférentielle du tuyau marin (1) à une position prédéterminée dans la direction longitudinale du tuyau marin (1) .

4. Système de détection de fuite de fluide pour tuyau marin selon l'une quelconque des revendications 1 à 3, dans lequel des informations d'identification de position identifiant la position d'installation de l'étiquette à circuit intégré (10) sur le tuyau marin sont stockées dans l'étiquette à circuit intégré (10), et
les informations d'identification de position sont transmises au récepteur d'ondes radio (14b) par l'intermédiaire ondes radio (W2) des transmises depuis l'étiquette à circuit intégré (10).

5. Système de détection de fuite de fluide pour tuyau marin selon l'une quelconque des revendications 1 à 4, dans lequel des étiquettes à circuit intégré (10) présentant des spécifications différentes ou bien des étiquettes à circuit intégré (10) de différents lots de fabrication sont installées en étant mélangées en tant qu'étiquette à circuit intégré (10).

6. Procédé de détection d'une fuite de fluide (L) circulant au travers d'un canal d'écoulement (1a) d'un tuyau marin (1) en utilisant le système de détection de fuite de fluide pour tuyau marin conforme à la revendication 1, le procédé comprenant :
la réception, par le récepteur d'ondes radio (14b), d'ondes radio (W2) transmises depuis l'étiquette à circuit intégré (10) en réponse à des ondes radio (W1) transmises depuis l'émetteur d'ondes radio (14a), et
la détection de la présence d'une fuite de fluide (L) lorsque l'intensité des ondes radio (W2) transmises depuis l'étiquette à circuit intégré (10) est inférieure à une valeur de référence (C).
